# EUROPEAN PATENT APPLICATION

(11) **EP 2 600 314 A1**
(43) Date of publication of application: **05.06.2013**
(21) Application number: 12191475.8
(22) Date of filing: 06.11.2012
(51) Int. Cl.: G06T 17/00

(54) **Simulation of three-dimensional (3d) cameras**

(30) Priority: 02.12.2011 US 201113310021
(71) Applicant: The Boeing Company, Chicago, IL 60606-2016 (US)
(72) Inventor: Erignac, Charles A., Kirkland, WA Washington 98033 (US)
(74) Representative: Hylarides, Paul Jacques

(57) **Abstract**

A method and apparatus for simulating images (104) generated by a three-dimensional imaging system (102). A group of models (128) for a group of effects (130) produced in the images generated by the three-dimensional imaging system (102) may be identified. Simulated images (152) that simulate the images generated by the three-dimensional imaging system (102) may be generated using the group of models (128) and a three-dimensional rendering system (115).

## Description

### BACKGROUND

The present disclosure relates generally to three-dimensional imaging systems and, in particular, to a method and apparatus for simulating images generated by three-dimensional imaging systems in substantially real time.

Imaging systems may be used in a variety of applications for performing different types of operations. For example, imaging systems may be used in robotic systems, navigation systems, inspection systems, surveillance systems, and other suitable types of systems. The performance of an imaging system used in one of these applications may depend on a number of factors including, for example, without limitation, the environment in which the imaging system is operating, properties of the components in the imaging system, and/or other suitable types of factors.

The components in an imaging system may include hardware components, software components, and/or components comprising both hardware and software. For example, an imaging system may include a number of lenses, mirrors, optical filters, light sensors, a focal plane array, and other devices in addition to image processing software.

The development and testing of an imaging system that performs as desired within selected tolerances may be performed by running simulations of the operation of the imaging system. Simulated data generated by running these simulations may then be used to make adjustments to the components in the imaging system.

For example, the simulated data may be used to change a configuration of lenses and mirrors in the imaging system, modify image processing software used in the imaging system, debug software used in the imaging system, and/or adjust the imaging system in some other suitable manner such that the imaging system performs as desired during operation.

Some currently available simulation systems may be capable of simulating operation of an imaging system in substantially real time. For example, these currently available simulation systems may generate simulated images that simulate the images that would be produced by the imaging system. However, these currently available simulation systems may not take into account effects produced in the images generated by the imaging system in response to environmental factors and/or properties of the components that form the imaging system. In particular, some currently available simulation systems may not take into account effects produced in the images generated by a three-dimensional (3D) imaging system in response to environmental factors and/or properties of the components that form the three-dimensional imaging system.

Therefore, it would be desirable to have a method and apparatus that takes into account at least some of the issues discussed above as well as other possible issues.

### SUMMARY

In one illustrative embodiment, a method may be provided for simulating images generated by a three-dimensional imaging system. A group of models for a group of effects produced in the images generated by the three-dimensional imaging system may be identified. Simulated images that simulate the images generated by the three-dimensional imaging system may be generated using the group of models and a three-dimensional rendering system.

In another illustrative embodiment, an apparatus for simulating images generated by a three-dimensional imaging system comprise a sensor model, an environment model, and a three-dimensional rendering system. The sensor model is configured to represent the three-dimensional imaging system. The environment model is configured to represent an environment in which the three-dimensional imaging system is to be operated. The three-dimensional rendering system is in communication with the sensor model and the environment model. Further, the three-dimensional rendering system is configured to identify a group of models for a group of effects produced in the images generated by the three-dimensional imaging system.

In yet another illustrative embodiment, a simulation system for simulating operation of a three-dimensional imaging system comprises a sensor model, an environment model, a group of models, and a three-dimensional rendering system. The sensor model is configured to represent the three-dimensional imaging system. The environment model is configured to represent one of an actual environment and a conceptual environment in which the three-dimensional imaging system is to be operated. The group of models is for a group of effects produced in images generated by the three-dimensional imaging system. The three-dimensional rendering system is in communication with one or more of the sensor model, the environment model, and the group of models for the group of effects. Further, the three-dimensional rendering system is configured to create a virtual environment using the environment model and simulate the operation of the three-dimensional imaging system in the virtual environment using the sensor model and the group of models for the group of effects.

These features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives, and features thereof will best be understood by reference to the following detailed description of an illustrative embodiment of the present disclosure when read in conjunction with the accompanying drawings, wherein:
Figure 1 is an illustration of a simulation system in the form of a block diagram in accordance with an illustrative embodiment;
Figure 2 is an illustration of a group of effects produced in images in the form of a block diagram in accordance with an illustrative embodiment;
Figure 3 is an illustration of factors that may cause a group of effects to be produced in images generated by a three-dimensional imaging system in the form of a block diagram in accordance with an illustrative embodiment;
Figure 4 is an illustration of a field of view for a three-dimensional imaging system in accordance with an illustrative embodiment;
Figure 5 is an illustration of a virtual environment in accordance with an illustrative embodiment;
Figure 6 is an illustration of a simulated intensity image in accordance with an illustrative embodiment;
Figure 7 is an illustration of a simulated depth image in accordance with an illustrative embodiment;
Figure 8 is an illustration of a point cloud in accordance with an illustrative embodiment;
Figure 9 is an illustration of a process for simulating a three-dimensional imaging system in the form of a flowchart in accordance with an illustrative embodiment; and
Figure 10 is an illustration of a data processing system in accordance with an illustrative embodiment.

### DETAILED DESCRIPTION

The different illustrative embodiments recognize and take into account different considerations. For example, the different illustrative embodiments recognize and take into account that oftentimes, environmental factors and/or the properties of the components in a three-dimensional imaging system may cause effects to be produced in the images generated by the three-dimensional imaging system. These effects may include, for example, without limitation, distortion, chromatic aberration, blurring, shadowing, and/or other types of effects.

Further, the different illustrative embodiments recognize and take into account that some currently available simulation systems may be unable to simulate these effects when simulating the images generated by a three-dimensional imaging system. The different illustrative embodiments recognize and take into account that simulating these effects may be important to fine-tuning the image processing software used in a three-dimensional imaging system, debugging the software used in a three-dimensional imaging system, adjusting the configurations of various components used in a three-dimensional imaging system, and/or performing other modifications to a three-dimensional imaging system.

Thus, the different illustrative embodiments provide a method and apparatus for simulating the operation of a three-dimensional imaging system. In one illustrative embodiment, a method may be provided for simulating images generated by a three-dimensional imaging system. A group of models for a group of effects produced in the images generated by the three-dimensional imaging system may be identified. Simulated images that simulate the images generated by the three-dimensional imaging system may be generated using the set of models and a three-dimensional rendering system.

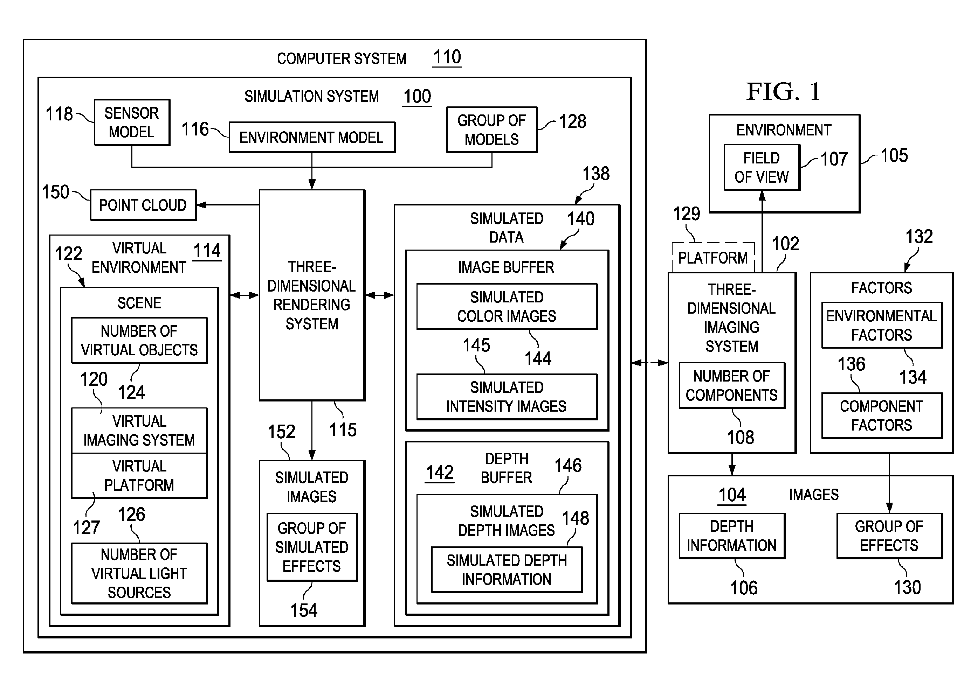

With reference now to the figures and, in particular, with reference to Figure 1, an illustration of a simulation system in the form of a block diagram is depicted in accordance with an illustrative embodiment. In these illustrative examples, simulation system 100 may be configured to simulate operation of three-dimensional imaging system 102 in these illustrative examples.

Three-dimensional imaging system 102 may take the form of any sensor system configured to generate images 104 that provide depth information 106. For example, three-dimensional imaging system 102 may generate images of the portion of environment 105, in which three-dimensional imaging system 102 operates, that is within field of view 107 for three-dimensional imaging system 102. Field of view 107 for three-dimensional imaging system 102 may be a three-dimensional area in environment 105.

In these illustrative examples, environment 105 may take a number of different forms. For example, without limitation, environment 105 may take the form of an outdoor area, an indoor area, a city, a neighborhood, a portion of a highway, an area in a forest, a region of airspace, an underwater area, an area in space, an area in a manufacturing facility, or some other suitable type of area of interest. Further, any number of objects may be present in environment 105. These objects may include, for example, without limitation, land features, grass, trees, sky, clouds, manmade structures, people, animals, bodies of water, roads, vehicles, aircraft, buildings, bridges, and/or other suitable types of objects.

Depending on the implementation, images 104 generated by three-dimensional imaging system 102 may be still images and/or form video of the portion of environment 105 within field of view 107 of three-dimensional imaging system 102. For example, three-dimensional imaging system 102 may take the form of a three-dimensional video camera configured to generate three-dimensional video of environment 105.

In these illustrative examples, depth information 106 may be the information needed to perceive environment 105 in images 104 in three dimensions. In particular, depth information 106 in images 104 may include a depth value for each pixel in each of images 104. The depth value associated with a particular pixel in an image may be, for example, without limitation, a measurement of the distance between three-dimensional imaging system 102 and a surface of an object in environment 105 represented by the particular pixel.

For example, images 104 generated by three-dimensional imaging system 102 may be color images or gray-scale images of environment 105 in which each pixel in an image is associated with a depth value in depth information 106 for environment 105. In this manner, three-dimensional imaging system 102 may also be referred to as a depth camera system or a depth camera.

As depicted, three-dimensional imaging system 102 may comprise number of components 108 configured to generate images 104. As used herein, a "number of" items means one or more items. For example, "number of components 108" means one more components. Number of components 108 may include hardware components, software components, and/or components comprising both hardware and software. For example, without limitation, number of components 108 may include at least one of a lens, a light sensor, a mirror, a prism, an optical filter, a computer, a microprocessor, an integrated circuit, image processing software, control software, and other suitable types of components.

As used herein, the phrase "at least one of", when used with a list of items, means that different combinations of one or more of the listed items may be used and, in some cases, only one of each item in the list may be needed. For example, at least one of a lens, a mirror, and a prism may be a lens or a lens and a mirror. In some cases, at least one of a lens, a mirror, and a prism may include a lens, a mirror, and a prism, or a mirror and a prism.

In other examples, at least one of a lens, a mirror, and an optical filter may be, for example, without limitation, two lenses, one mirror, and ten optical filters; four mirrors and seven optical filters; or some other suitable combination. In this manner, number of components 108 may include any combination of components suitable for use in three-dimensional imaging system 102.

In these illustrative examples, simulation system 100 may be used to simulate three-dimensional imaging system 102. In some cases, these simulations may be used in developing and testing three-dimensional imaging system 102. For example, simulation system 100 may be used to run simulations for virtual prototyping of three-dimensional imaging system 102. Virtual prototyping of three-dimensional imaging system 102 may include developing, testing, validating, and/or modifying the design and configuration of three-dimensional imaging system 102 before the physical prototype of three-dimensional imaging system 102 is built.

Simulation system 100 may be implemented using hardware, software, or a combination of the two. In one illustrative example, simulation system 100 may be implemented in computer system 110. Computer system 110 may comprise a number of computers. When more than one computer is present in computer system 110, these computers may be in communication with each other. In this manner, depending on the implementation, these computers may be in a same location or in different locations.

Simulation system 100 may be configured to simulate operation of three-dimensional imaging system 102 in an environment, such as environment 105, using three-dimensional rendering system 115. Three-dimensional rendering system 115 may be configured to represent a scene having three dimensions, such as, for example, a portion of environment 105, in two dimensions.

Three-dimensional rendering system 115 may be configured such that operation of three-dimensional imaging system 102 may be simulated in substantially real-time. Three-dimensional rendering system 115 may be implemented using currently available three-dimensional rendering systems. For example, three-dimensional rendering system 115 may be implemented using OpenGL®, available from the Silicon Graphics International Corporation; DirectX®, available from the Microsoft Corporation; and/or some other suitable type of three-dimensional rendering system.

As depicted, three-dimensional rendering system 115 may create virtual environment 114 for simulating operation of three-dimensional imaging system 102. Virtual environment 114 may be a representation of an actual or conceptual environment in which three-dimensional imaging system 102 may be operated. For example, virtual environment 114 may be a computer-generated representation of environment 105 in which three-dimensional imaging system 102 may be operated.

In these illustrative examples, three-dimensional rendering system 115 may generate virtual environment 114 using environment model 116. Environment model 116 may be, for example, a three-dimensional mathematical representation of environment 105. Further, environment model 116 may include models of objects to be represented in virtual environment 114. In one illustrative example, environment model 116 may take the form of a computer-aided design (CAD) model.

Further, simulation system 100 may add virtual imaging system 120 to virtual environment 114 using sensor model 118. Sensor model 118 may be a representation of three-dimensional imaging system 102. In some cases, sensor model 118 may include a number of algorithms and/or processes configured to simulate the operation of three-dimensional imaging system 102.

In these illustrative examples, three-dimensional rendering system 115 may be configured to store virtual environment 114 generated based on environment model 116 as scene 122. Scene 122 may be a two-dimensional representation of virtual environment 114.

Scene 122 may comprise number of virtual objects 124, virtual imaging system 120, and number of virtual light sources 126. In some illustrative examples, each of number of virtual objects 124 may take the form of a polygonal mesh having properties that define the color and/or specularity of the surface of the object being represented. The specularity of the surface of an object may be a measure of the specular reflectivity of the surface of the object.

Further, number of virtual light sources 126 may be representations of different types of light sources. These different types of light sources may include, for example, without limitation, a light source associated with three-dimensional imaging system 102, a natural light source, a lamp, and/or other suitable types of light sources.

In other illustrative examples, scene 122 may include virtual platform 127 associated with virtual imaging system 120. Virtual platform 127 may represent, for example, without limitation, platform 129 on which three-dimensional imaging system 102 may be mounted. Platform 129 may take the form of a stationary or mobile platform. In other words, when three-dimensional imaging system 102 is associated with platform 129, three-dimensional imaging system 102 may remain substantially stationary and/or may be moved within environment 105.

Additionally, simulation system 100 may also use group of models 128 with sensor model 118 and environment model 116 to simulate the operation of three-dimensional imaging system 102. As used herein, a "group of" items means one or more items. For example, "group of models 128" may be one or more models.

Group of models 128 may be configured to simulate group of effects 130 that may be produced in images 104 generated by three-dimensional imaging system 102. As used herein, an "effect" in an image generated by three-dimensional imaging system 102 may be any type of variance or difference in the appearance of a scene captured in the image and the actual scene. In some cases, an "effect" in an image generated by three-dimensional imaging system 102 may be an undesired feature in the image.

As one illustrative example, blurring may be one effect in group of effects 130 that may be produced in images 104. Blurring in an image may be an unclear or indistinct appearance of one or more objects in the scene captured in the image. Blurring may occur when three-dimensional imaging system 102 loses focus.

In some illustrative examples, a model in group of models 128 may simulate one or more of group of effects 130. In other cases, more than one model in group of models 128 may be used to simulate an effect in group of effects 130.

As depicted, an effect in group of effects 130 may be caused by one or more of factors 132. Further, one or more of factors 132 may cause more than one effect in group of effects 130. Factors 132 may include, for example, without limitation, environmental factors 134, component factors 136, and/or other suitable types of factors. Environmental factors 134 may be factors related to the environment in which three-dimensional imaging system 102 operates. Component factors 136 may be factors related to one or more of number of components 108 in three-dimensional imaging system 102.

Three-dimensional rendering system 115 in simulation system 100 may use environment model 116, sensor model 118, and group of models 128 to generate simulated data 138. In some cases, three-dimensional rendering system 115 may introduce one or more models in group of models 128 into sensor model 118 and/or environment model 116 to generate simulated data 138.

In one illustrative example, simulated data 138 may take the form of image buffer 140 and depth buffer 142. Image buffer 140 may include at least one of simulated color images 144 and simulated intensity images 145. Simulated color images 144 and simulated intensity images 145 may represent the color information and intensity information, respectively, that would be provided in images 104 generated by three-dimensional imaging system 102 if three-dimensional imaging system 102 were operating in an environment that is physically substantially equivalent to virtual environment 114.

Depth buffer 142 may include simulated depth images 146 that provide simulated depth information 148. For example, without limitation, each pixel in one of simulated depth images 146 may represent a simulated depth value for a corresponding pixel in a corresponding one of simulated color images 144.

Each of simulated depth images 146, simulated color images 144, and simulated intensity images 145 may be generated based on a current state of virtual environment 114 and number of virtual objects 124, as well as the locations of virtual imaging system 120 and number of virtual light sources 126 in virtual environment 114. The state of number of virtual objects 124 may include locations of these objects within virtual environment 114.

In some illustrative examples, three-dimensional rendering system 115 may use simulated depth images 146 in depth buffer 142 to form point cloud 150. Point cloud 150 may comprise a plurality of vertices in a three-dimensional coordinate system. The vertices in point cloud 150 may represent points on the various surfaces simulated in virtual environment 114. For example, in some cases, point cloud 150 may be formed for one or more of number of virtual objects 124 in virtual environment 114. In other illustrative examples, point cloud 150 may be formed for the entire space within virtual environment 114.

Three-dimensional rendering system 115 may be configured to use image buffer 140 along with point cloud 150 to generate simulated images 152 that simulate images 104 that would be generated by three-dimensional imaging system 102 if three-dimensional imaging system 102 were operating in an environment that is physically substantially equivalent to virtual environment 114. Further, simulated images 152 may include group of simulated effects 154 that represent group of effects 130 that would be produced in images 104 generated by three-dimensional imaging system 102.

In this manner, simulation system 100 may provide a system for simulating the operation of three-dimensional imaging system 102. In one illustrative example, three-dimensional imaging system 102 may take the form of a system embedded in a device, such as, for example, an autonomous robotic machine. In this illustrative example, simulated images 152 generated by simulation system 100 may be used in performing software-in-the-loop testing and/or hardware-in-the-loop testing of the autonomous robotic machine.

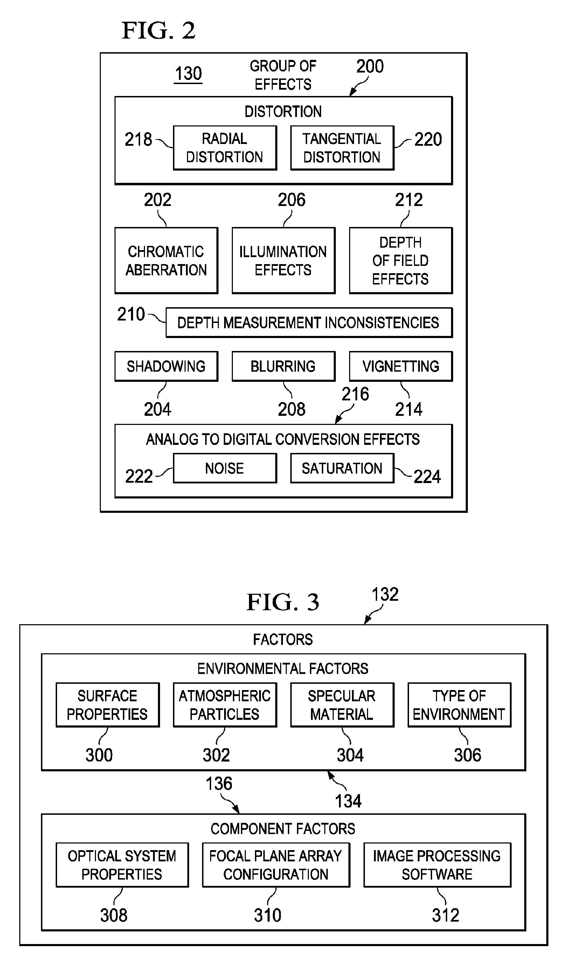

With reference now to Figure 2, an illustration of a group of effects produced in images in the form of a block diagram is depicted in accordance with an illustrative embodiment. Examples of effects that may be included in group of effects 130 from Figure 1 are described in Figure 2.

As depicted, group of effects 130 may include, for example, distortion 200, chromatic aberration 202, shadowing 204, illumination effects 206, blurring 208, depth measurement inconsistencies 210, depth of field effects 212, vignetting 214, and analog to digital conversion effects 216. Of course, in other illustrative examples, other effects in addition to or in place of the ones described above may be included in group of effects 130.

Distortion 200 may occur in an image of a scene when straight lines in the scene do not appear as substantially straight lines in the image of the scene. Distortion 200 may include, for example, radial distortion 218, tangential distortion 220, and/or other suitable types of distortion. Radial distortion 218 may be distortion that is radially symmetric. Tangential distortion 220 may be distortion that is created by a misalignment of the lenses and a focal plane array in three-dimensional imaging system 102 in Figure 1.

Chromatic aberration 202 may be a type of distortion in which a lens in three-dimensional imaging system 102 is unable to focus all colors to a same convergence point. Typically, chromatic aberration 202 may occur in an image when lenses in three-dimensional imaging system 102 used to generate the image have a different refractive index for different wavelengths of light.

Shadowing 204 may occur when a light source for three-dimensional imaging system 102 is not located in substantially the same location in environment 105 as three-dimensional imaging system 102. Illumination effects 206 in an image may be lighting effects that occur in response to light propagating through a scene by bouncing between different surfaces in the scene and through translucent and/or transparent media between the scene and three-dimensional imaging system 102. Illumination effects 206 may include, for example, light diffusion, reflections, and refraction effects.

Blurring 208 may be an unclear or indistinct appearance of one or more objects in an image. Blurring 208 may occur when three-dimensional imaging system 102 is moved through environment 105 and/or when objects in environment 105 move relative to three-dimensional imaging system 102.

Further, depth measurement inconsistencies 210 may be inaccurate depth values. Inaccurate depth values may be generated by three-dimensional imaging system 102 in response to noise, surface reflections, and/or other suitable factors.

Depth of field effects 212 may appear in an image as the blurring of some portions of a scene in the image, while other portions of the scene are in focus. Vignetting 214 may be present in an image when peripheral areas of the image appear less bright than a central area of the image.

Analog to digital conversion effects 216 may occur as a result of the conversion of light detected at three-dimensional imaging system 102 by, for example, a focal plane array, to electrical signals that can be processed by, for example, a processor unit in three-dimensional imaging system 102. Further, in some cases, analog to digital conversion effects 216 may occur as a result of the processing of these electrical signals to form an image.

Analog to digital conversion effects may include, for example, without limitation, noise 222, saturation 224, and/or other suitable types of effects. Noise 222 may include random local variations in brightness and/or color and/or other aberrations in an image. In some cases, noise 222 may take the form of "salt and pepper" noise.

Saturation 224 may occur when the luminance levels in a scene being imaged are too bright or too dark to be captured in an image based on the range of possible values for the pixels in the image. In other words, the range of luminance levels in the scene may be greater than the range of possible values for the pixels in the image. As a result, variations in brightness or variations in darkness beyond the scope of the values for the pixels in the image may not be represented in some pixels in the image. These pixels may be referred to as "saturated".

Of course, in other illustrative examples, other effects in addition to and/or in place of the ones described above may appear in images generated by three-dimensional imaging system 102 in Figure 1. For example, without limitation, effects, such as nonlinearity, haziness, lens flare, visible artifacts, undesired features, and/or other suitable types of effects may appear in the images.

With reference now to Figure 3, an illustration of factors that may cause a group of effects to be produced in images generated by a three-dimensional imaging system in the form of a block diagram is depicted in accordance with an illustrative embodiment. In this illustrative example, examples of factors 132 from Figure 1 may be described.

Environmental factors 134 may include, for example, without limitation, surface properties 300, atmospheric particles 302, specular material 304, type of environment 306, and/or other suitable types of environmental factors. Surface properties 300 may include the properties of the different surfaces within environment 105 in Figure 1. For example, surface properties 300 may include the properties of the surfaces of a number of aircraft in environment 105.

Atmospheric particles 302 may include, for example, without limitation, particles of smoke, fog, haze, clouds, smog, and/or other atmospheric conditions. Atmospheric particles 302 may cause an image to look hazy.

Specular material 304 may be any material that behaves like a mirror for certain relative angles between a light source, the reflecting surface, and the viewpoint of three-dimensional imaging system 102. Specular material 304 may cause specular highlights in an image. Specular highlights may be very bright regions that have the color of the light source.

Type of environment 306 may be the type of environment in which three-dimensional imaging system 102 is configured to operate. For example, without limitation, type of environment 306 may be selected from one of an underwater environment, a land environment, an aerial environment, a wind tunnel, a space environment, or some other suitable type of environment.

In this illustrative example, component factors 136 may include optical system properties 308, focal plane array configuration 310, image processing software 312, and/or other suitable factors. Optical system properties 308 may include, for example, without limitation, the number of lenses used, the types of lenses used, the materials that make up a lens, properties of the optical filters used, and/or other properties of the optical components in three-dimensional imaging system 102. Optical system properties 308 may cause an image to appear hazy, may cause a lens flare, and/or other types of effects.

Focal plane array configuration 310 may include the configuration of a focal plane array in three-dimensional imaging system 102. Focal plane array configuration 310 may introduce one or more effects into an image when the focal plane array is not properly calibrated within selected tolerances.

Further, image processing software 312 used in three-dimensional imaging system 102 may introduce one or more effects into an image. As one illustrative example, image processing software 312 that compresses the information generated by three-dimensional imaging system 102 to form a compressed image may cause undesired features to appear in an image. For example, certain objects may appear unclear or indistinct in a compressed image.

The illustrations of simulation system 100 in Figure 1, group of effects 130 in Figure 2, and factors 132 in Figure 3 are not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, in some illustrative examples, one or more imaging systems in addition to three-dimensional imaging system 102 may be simulated. In particular, one or more virtual imaging systems in addition to virtual imaging system 120 may be added to virtual environment 114.

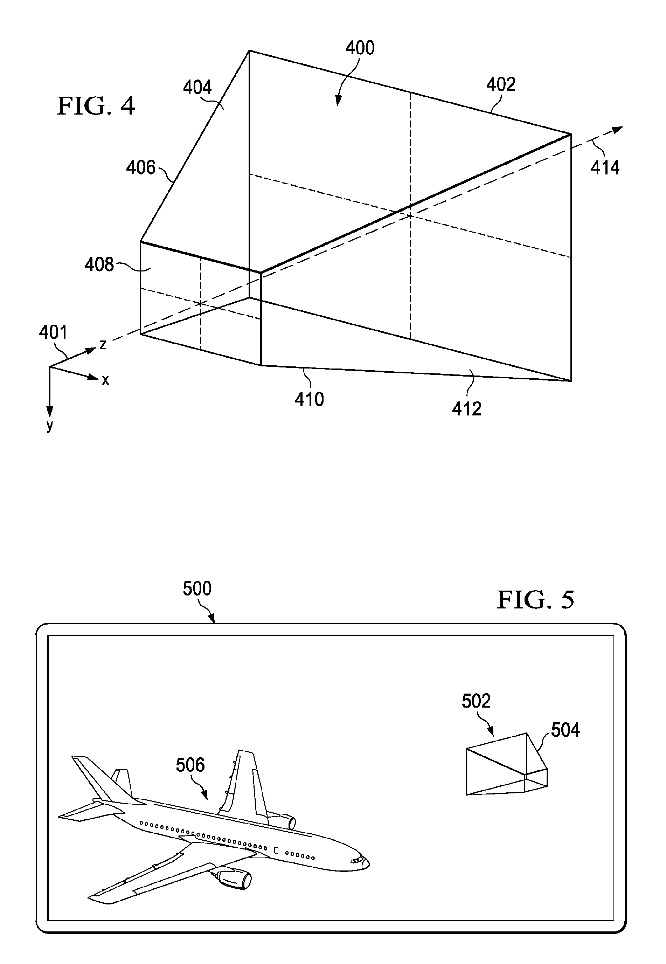

With reference now to Figure 4, an illustration of a field of view for a three-dimensional imaging system is depicted in accordance with an illustrative embodiment. In this illustrative example, field of view 400 may be an example of one implementation for field of view 107 in Figure 1. Field of view 400 may be for a three-dimensional imaging system, such as three-dimensional imaging system 102 in Figure 1, at location 401.

As depicted, field of view 400 may be defined by front plane 402, top plane 404, left plane 406, back plane 408, bottom plane 410, and right plane 412. Further, line of sight 414 for the three-dimensional imaging system may originate from location 401 and extends through a center of field of view 400.

With reference now to Figure 5, an illustration of a virtual environment is depicted in accordance with an illustrative embodiment. In this illustrative example, virtual environment 500 may be an example of one implementation for virtual environment 114 in Figure 1. As depicted, virtual imaging system 502 may be present in virtual environment 500.

Virtual imaging system 502 may be a representation of a three-dimensional imaging system, such as three-dimensional imaging system 102 in Figure 1. In this illustrative example, virtual light source 504 may be associated with virtual imaging system 502 in virtual environment 500.

Further, virtual object 506 also may be present in virtual environment 500. Virtual object 506 may represent an aircraft in this depicted example. Virtual environment 500 may be generated such that images of the aircraft represented by virtual object 506 that would be generated by the three-dimensional imaging system represented by virtual imaging system 502 may be simulated.

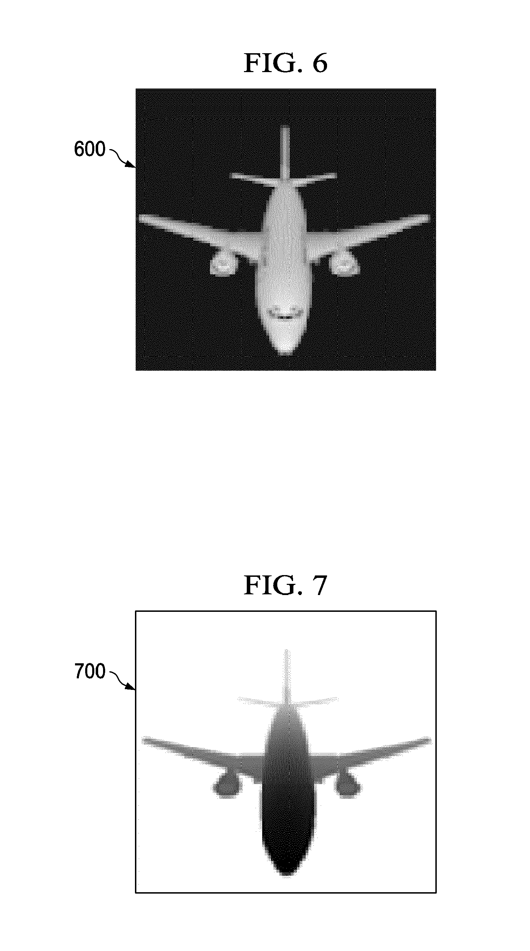

With reference now to Figure 6, an illustration of a simulated intensity image is depicted in accordance with an illustrative embodiment. In this illustrative example, simulated intensity image 600 may be an example of one implementation for one of simulated intensity images 145 in image buffer 140 in Figure 1.

Simulated intensity image 600 may be generated using, for example, three-dimensional rendering system 115 in Figure 1. Simulated intensity image 600 may be an example of an image generated using virtual imaging system 502 in virtual environment 500 in Figure 5. In this illustrative example, each pixel in simulated intensity image 600 may represent an intensity value for a point on virtual object 506 in Figure 5 captured by the image.

With reference now to Figure 7, an illustration of a simulated depth image is depicted in accordance with an illustrative embodiment. In this illustrative example, simulated depth image 700 may be an example of one implementation for one of simulated depth images 146 in depth buffer 142 in Figure 1.

Simulated depth image 700 may be generated using, for example, three-dimensional rendering system 115 in Figure 1. Each pixel in simulated depth image 700 may represent a depth value corresponding to a corresponding pixel in simulated intensity image 600 in Figure 6.

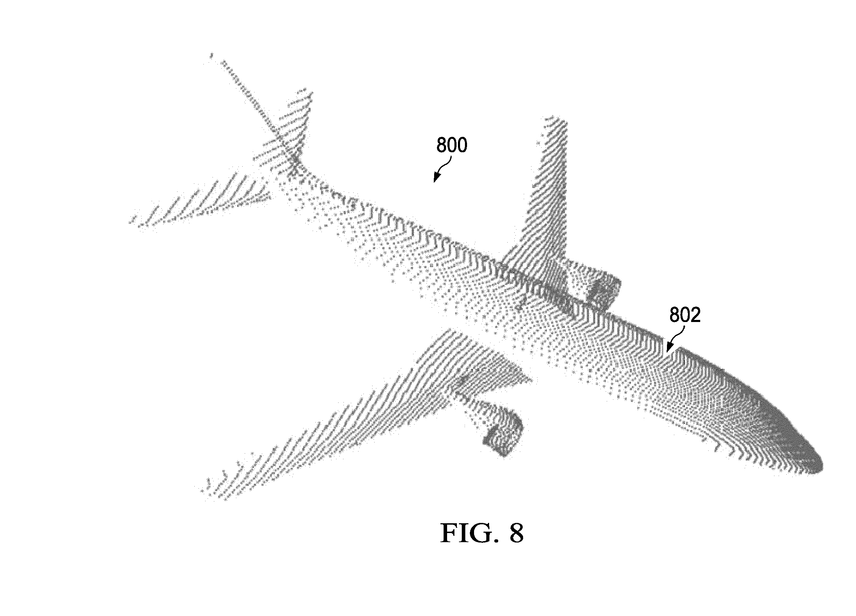

Turning now to Figure 8, an illustration of a point cloud is depicted in accordance with an illustrative embodiment. In this illustrative example, point cloud 800 may be an example of one implementation for point cloud 150 in Figure 1. Point cloud 800 may be formed using, for example, three-dimensional rendering system 115 in Figure 1.

In particular, three-dimensional rendering system 115 may use simulated depth image 700 and/or other simulated depth images generated for virtual imaging system 502 in virtual environment 500 in Figure 5 to form point cloud 800. As depicted, each of vertices 802 in point cloud 800 may represent a point on a surface of virtual object 506 in Figure 5.

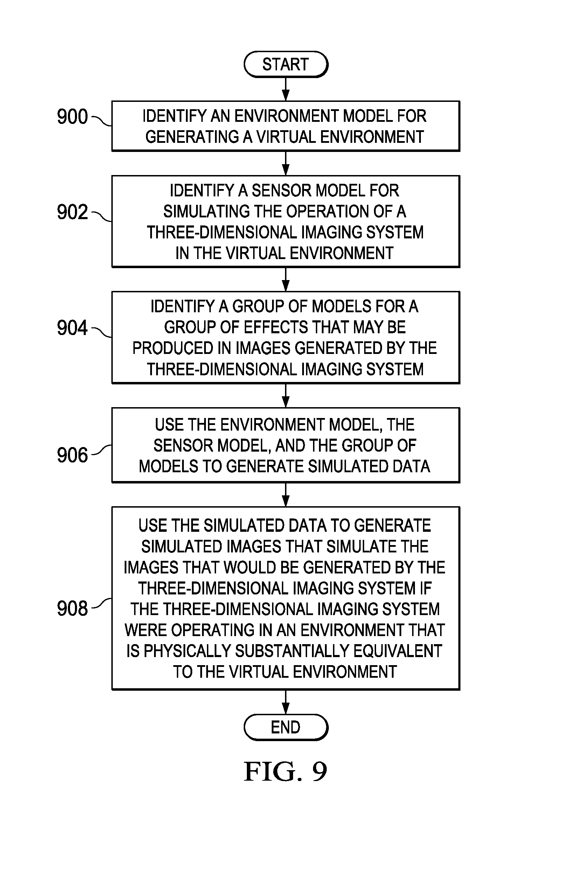

With reference now to Figure 9, an illustration of a process for simulating a three-dimensional imaging system in the form of a flowchart is depicted in accordance with an illustrative embodiment. The process illustrated in Figure 9 may be implemented using simulation system 100 in Figure 1 to simulate three-dimensional imaging system 102 in Figure 1.

The process may begin by identifying an environment model for generating a virtual environment (operation 900). The process may then identify a sensor model for simulating the operation of a three-dimensional imaging system in the virtual environment (operation 902). Thereafter, the process may identify a group of models for a group of effects that may be produced in images generated by the three-dimensional imaging system (operation 904).

The process may then use the environment model, the sensor model, and the group of models to generate simulated data (operation 906). Next, the process may use the simulated data to generate simulated images that simulate the images that would be generated by the three-dimensional imaging system if the three-dimensional imaging system were operating in an environment that is physically substantially equivalent to the virtual environment (operation 908), with the process terminating thereafter.

The flowchart and block diagrams in the different depicted embodiments illustrate the architecture, functionality, and operation of some possible implementations of apparatuses and methods in an illustrative embodiment. In this regard, each block in the flowchart or block diagrams may represent a module, segment, function, and/or a portion of an operation or step. For example, one or more of the blocks may be implemented as program code, in hardware, or a combination of the program code and hardware. When implemented in hardware, the hardware may, for example, take the form of integrated circuits that are manufactured or configured to perform one or more operations in the flowchart or block diagrams.

In some alternative implementations of an illustrative embodiment, the function or functions noted in the block may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

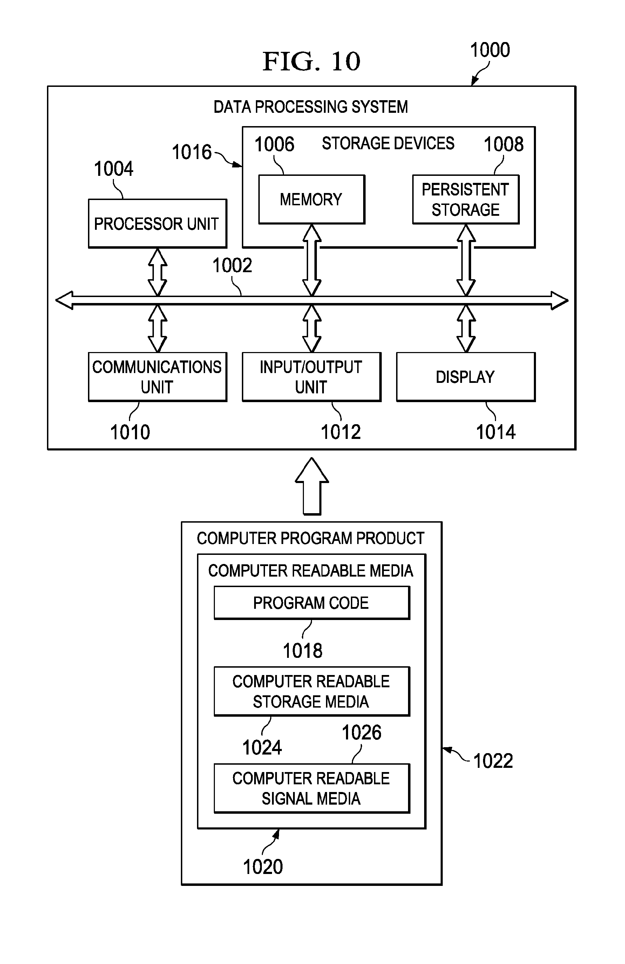

Turning now to Figure 10, an illustration of a data processing system is depicted in accordance with an illustrative embodiment. In this illustrative example, data processing system 1000 may be used to implement one or more computers in computer system 110 in Figure 1. Data processing system 1000 includes communications fabric 1002, which provides communications between processor unit 1004, memory 1006, persistent storage 1008, communications unit 1010, input/output (I/O) unit 1012, and display 1014.

Processor unit 1004 serves to execute instructions for software that may be loaded into memory 1006. Processor unit 1004 may include a number of processors, a multi-processor core, a graphics processing unit (GPU), and/or some other type of processor, depending on the particular implementation. A number, as used herein with reference to an item, means one or more items. Further, processor unit 1004 may be implemented using a number of heterogeneous processor systems in which a main processor is present with secondary processors on a single chip. As another illustrative example, processor unit 1004 may be a symmetric multi-processor system containing multiple processors of the same type.

Memory 1006 and persistent storage 1008 are examples of storage devices 1016. A storage device is any piece of hardware that is capable of storing information, such as, for example, without limitation, data, program code in functional form, and/or other suitable information either on a temporary basis and/or a permanent basis. Storage devices 1016 may also be referred to as computer readable storage devices in these examples. Memory 1006, in these examples, may be, for example, a random access memory or any other suitable volatile or non-volatile storage device. Persistent storage 1008 may take various forms, depending on the particular implementation.

For example, persistent storage 1008 may contain one or more components or devices. For example, persistent storage 1008 may be a hard drive, a flash memory, a rewritable optical disk, a rewritable magnetic tape, or some combination of the above. The media used by persistent storage 1008 also may be removable. For example, a removable hard drive may be used for persistent storage 1008.

Communications unit 1010, in these examples, provides for communications with other data processing systems or devices. In these examples, communications unit 1010 is a network interface card. Communications unit 1010 may provide communications through the use of either or both physical and wireless communications links.

Input/output unit 1012 allows for input and output of data with other devices that may be connected to data processing system 1000. For example, input/output unit 1012 may provide a connection for user input through a keyboard, a mouse, and/or some other suitable input device. Further, input/output unit 1012 may send output to a printer. Display 1014 provides a mechanism to display information to a user.

Instructions for the operating system, applications, and/or programs may be located in storage devices 1016, which are in communication with processor unit 1004 through communications fabric 1002. In these illustrative examples, the instructions are in a functional form on persistent storage 1008. These instructions may be loaded into memory 1006 for execution by processor unit 1004. The processes of the different embodiments may be performed by processor unit 1004 using computer-implemented instructions, which may be located in a memory, such as memory 1006.

These instructions are referred to as program code, computer usable program code, or computer readable program code that may be read and executed by a processor in processor unit 1004. The program code in the different embodiments may be embodied on different physical or computer readable storage media, such as memory 1006 or persistent storage 1008.

Program code 1018 is located in a functional form on computer readable media 1020 that is selectively removable and may be loaded onto or transferred to data processing system 1000 for execution by processor unit 1004. Program code 1018 and computer readable media 1020 form computer program product 1022 in these examples. In one example, computer readable media 1020 may be computer readable storage media 1024 or computer readable signal media 1026. Computer readable storage media 1024 may include, for example, an optical or magnetic disk that is inserted or placed into a drive or other device that is part of persistent storage 1008 for transfer onto a storage device, such as a hard drive, that is part of persistent storage 1008.

Computer readable storage media 1024 also may take the form of a persistent storage, such as a hard drive, a thumb drive, or a flash memory, that is connected to data processing system 1000. In some instances, computer readable storage media 1024 may not be removable from data processing system 1000. In these examples, computer readable storage media 1024 is a physical or tangible storage device used to store program code 1018 rather than a medium that propagates or transmits program code 1018. Computer readable storage media 1024 is also referred to as a computer readable tangible storage device or a computer readable physical storage device. In other words, computer readable storage media 1024 is a media that can be touched by a person.

Alternatively, program code 1018 may be transferred to data processing system 1000 using computer readable signal media 1026. Computer readable signal media 1026 may be, for example, a propagated data signal containing program code 1018. For example, computer readable signal media 1026 may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some illustrative embodiments, program code 1018 may be downloaded over a network to persistent storage 1008 from another device or data processing system through computer readable signal media 1026 for use within data processing system 1000. For instance, program code stored in a computer readable storage medium in a server data processing system may be downloaded over a network from the server to data processing system 1000. The data processing system providing program code 1018 may be a server computer, a client computer, or some other device capable of storing and transmitting program code 1018.

The different components illustrated for data processing system 1000 are not meant to provide architectural limitations to the manner in which different embodiments may be implemented. The different illustrative embodiments may be implemented in a data processing system including components in addition to or in place of those illustrated for data processing system 1000. Other components shown in Figure 10 can be varied from the illustrative examples shown. The different embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.

In another illustrative example, processor unit 1004 may take the form of a hardware unit that has circuits that are manufactured or configured for a particular use. This type of hardware may perform operations without needing program code to be loaded into a memory from a storage device to be configured to perform the operations.

For example, when processor unit 1004 takes the form of a hardware unit, processor unit 1004 may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, and other suitable hardware devices. With this type of implementation, program code 1018 may be omitted, because the processes for the different embodiments are implemented in a hardware unit.

In still another illustrative example, processor unit 1004 may be implemented using a combination of processors found in computers and hardware units. Processor unit 1004 may have a number of hardware units and a number of processors that are configured to run program code 1018. With this depicted example, some of the processes may be implemented in the number of hardware units, while other processes may be implemented in the number of processors.

In another example, a bus system may be used to implement communications fabric 1002 and may be comprised of one or more buses, such as a system bus or an input/output bus. Of course, the bus system may be implemented using any suitable type of architecture that provides for a transfer of data between different components or devices attached to the bus system.

Additionally, a communications unit may include a number of devices that transmit data, receive data, or transmit and receive data. A communications unit may be, for example, a modem or a network adapter, two network adapters, or some combination thereof. Further, a memory may be, for example, memory 1006, or a cache, such as found in an interface and memory controller hub that may be present in communications fabric 1002.

In the text and the figures, a method is disclosed for simulating images 104 generated by a three-dimensional imaging system 102, the method including identifying a group of models 128 for a group of effects 130 produced in the images generated by the three-dimensional imaging system 102, and generating simulated images 152 that simulate the images generated by the three-dimensional imaging system 102 using the group of models 128 and a three-dimensional rendering system 115. In one example, the method further includes: identifying an environment model 116 configured to represent an environment 105 in which the three-dimensional imaging system 102 is to be operated. In one instance, the method further includes generating a virtual environment 114 using the environment model 116 in which the virtual environment 114 represents one of an actual environment and a conceptual environment in which the three-dimensional imaging system 102 is to be operated. In one example, the method further includes identifying a sensor model 118 configured to simulate the three-dimensional imaging system 102.

In one variant, the method includes wherein the step of generating the simulated images 152 includes generating simulated data 138 using the group of models 128 for the group of effects 130, the environment model 116, the sensor model 118, and the three-dimensional rendering system 115, wherein the simulated data includes an image buffer 140 and a depth buffer 142. In yet another example, the method further includes wherein the step of generating the simulated images 152 further includes: generating the simulated images 152 that simulate the images 104 generated by the three-dimensional imaging system 102 using the image buffer 140 and the depth buffer 142. In yet another instance, wherein the step of generating the simulated images 152 that simulate the images 104 generated by the three-dimensional imaging system 102 using the image buffer 140 and the depth buffer 142 includes generating a point cloud using the depth buffer 142; and generating the simulated images 152 using the point cloud and at least one of simulated color images 144 and simulated intensity images 145 in the image buffer 140.

In yet another example, the method further includes: identifying the group of effects 130 produced in the images 104 generated by the three-dimensional imaging system 102.

In one instance, the method includes wherein an effect in the group of effects 130 is caused by a number of factors in which the number of factors (132) include at least one of environmental factors 134 and component factors 136 and wherein the group of effects 130 include at least one of distortion 200, radial distortion 218, tangential distortion 220, chromatic aberration 202, shadowing 210, blurring 208, depth measurement inconsistencies 210, depth of field effects 212, vignetting 214, analog to digital conversion effects 216, noise 222, and saturation 224.

In one aspect, an apparatus is disclosed for simulating images 104 generated by a three-dimensional imaging system 102, the apparatus including a sensor model 118 configured to represent the three-dimensional imaging system 102, an environment model 116 configured to represent an environment 105 in which the three-dimensional imaging system 102 is to be operated; and a three-dimensional rendering system 115 in communication with the sensor model 118 and the environment model 116 and configured to identify a group of models 128 for a group of effects 130 produced in the images 104 generated by the three-dimensional imaging system 102. In one instance, the apparatus further includes a virtual environment 114 created by the three-dimensional rendering system 115 using the environment model 116, wherein the virtual environment 114 represents one of an actual environment and a conceptual environment within which the three-dimensional imaging system 102 is to be operated. In yet another instance, the apparatus includes wherein the three-dimensional rendering system 115 is further configured to simulate operation of the three-dimensional imaging system 102 in the virtual environment 114 using the sensor model 118 and the group of models 128 for the group of effects 130. In one example, the apparatus includes wherein the three-dimensional imaging system 102 is further configured to generate simulated data 138 using the sensor model 118, the environment model 116, and the group of models 128 for the group of effects 130, wherein the simulated data includes an image buffer 140 and a depth buffer 142. In another example, the apparatus includes wherein the depth buffer 142 includes simulated depth images 104 and wherein the image buffer 140 includes at least one of simulated color images 144 and simulated intensity images 145. In one variant, the apparatus includes wherein the three-dimensional rendering system 115 is further configured to generate simulated images 152 using at least one of the simulated depth images 104, the simulated color images 144, and the simulated intensity images 145, wherein the simulated images 152 represent the images 104 generated by the three-dimensional imaging system 102 when the three-dimensional imaging system 102 is operated in the environment 105 that is physically substantially equivalent to the virtual environment 114 created by the three-dimensional rendering system 115. In one variant, the apparatus includes wherein the three-dimensional rendering system 115 is further configured to generate a point cloud 150 using the simulated depth images 104 and generate simulated images 152 using the point cloud 150 and at least one of the simulated color images 144 and simulated intensity images 145 in the image buffer 140. In another variant, the apparatus includes wherein simulated images 152 include a group of simulated effects that represent the group of effects 130 produced in the images generated by the three-dimensional imaging system 102 when the three-dimensional imaging system 102 is operated in an environment that is physically substantially equivalent to the virtual environment 114 created by the three-dimensional rendering system 115. In yet another variant, the apparatus includes wherein an effect in the group of effects 130 is caused by a number of factors in which the number of factors include at least one of environmental factors and component factors and wherein the group of effects 130 include at least one of distortion, radial distortion, tangential distortion, chromatic aberration, shadowing, blurring, depth measurement inconsistencies, depth of field effects, vignetting, analog to digital conversion effects, noise, and saturation.

In one aspect, a simulation system is disclosed for simulating operation of a three-dimensional imaging system 102, the simulation system includes a sensor model 118 configured to represent the three-dimensional imaging system 102, an environment model 116 configured to represent one of an actual environment and a conceptual environment in which the three-dimensional imaging system 102 is to be operated, a group of models 128 for a group of effects 130 produced in images generated by the three-dimensional imaging system 102, and a three-dimensional rendering system 115 in communication with one or more of the sensor model 118, the environment model 116, and the group of models 128 for the group of effects 130 and configured to create a virtual environment 114 using the environment model 116 and simulate the operation of the three-dimensional imaging system 102 in the virtual environment 114 using the sensor model 118 and the group of models 128 for the group of effects 130. In another instance, the simulation system includes wherein the three-dimensional rendering system 115 is configured to generate simulated images 152 based on a simulation of the operation of the three-dimensional imaging system 102 using the environment model 116, the sensor model 118, and the group of models 128, wherein the simulated images 152 include a group of simulated effects that represent one or more of the group of effects 130 produced in images generated by the three-dimensional imaging system 102 when the three-dimensional imaging system 102 is operated in an environment that is physically substantially equivalent to the virtual environment 114 created by the three-dimensional rendering system 115.

Thus, the different illustrative embodiments provide a method and apparatus for simulating the operation of a three-dimensional imaging system. In one illustrative embodiment, a method may be provided for simulating images generated by a three-dimensional imaging system. A group of models for a group of effects produced in the images generated by the three-dimensional imaging system may be identified. Simulated images that simulate the images generated by the three-dimensional imaging system may be generated using the set of models and a three-dimensional rendering system.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for simulating images (104) generated by a three-dimensional imaging system (102), the method comprising:
identifying a group of models (128) for a group of effects (130) produced in the images generated by the three-dimensional imaging system (102); and
generating simulated images (152) that simulate the images generated by the three-dimensional imaging system (102) using the group of models (128) and a three-dimensional rendering system (115).

2. The method of claim 1 further comprising:
identifying an environment model (116) configured to represent an environment (105) in which the three-dimensional imaging system (102) is to be operated;
identifying the group of effects (130) produced in the images (104) generated by the three-dimensional imaging system (102);
generating a virtual environment (114) using the environment model (116) in which the virtual environment (114) represents one of an actual environment and a conceptual environment in which the three-dimensional imaging system (102) is to be operated; and
identifying a sensor model (118) configured to simulate the three-dimensional imaging system (102).

3. The method of any of claims 1 or 2, wherein the step of generating the simulated images (152) comprises:
generating simulated data (138) using the group of models (128) for the group of effects (130), the environment model (116), the sensor model (118), and the three-dimensional rendering system (115), wherein the simulated data includes an image buffer (140) and a depth buffer (142).

4. The method of claim 3, wherein the step of generating the simulated images (152) further comprises:
generating the simulated images (152) that simulate the images (104) generated by the three-dimensional imaging system (102) using the image buffer (140) and the depth buffer (142).

5. The method of claim 4, wherein the step of generating the simulated images (152) that simulate the images (104) generated by the three-dimensional imaging system (102) using the image buffer (140) and the depth buffer (142) comprises:
generating a point cloud using the depth buffer (142); and
generating the simulated images (152) using the point cloud and at least one of simulated color images (144) and simulated intensity images (145) in the image buffer (140).

6. The method of any of claims 1-5, wherein an effect in the group of effects (130) is caused by a number of factors in which the number of factors (132) include at least one of environmental factors (134) and component factors (136) and wherein the group of effects (130) include at least one of distortion (200), radial distortion (218), tangential distortion (220), chromatic aberration (202), shadowing (210), blurring (208), depth measurement inconsistencies (210), depth of field effects (212), vignetting (214), analog to digital conversion effects (216), noise (222), and saturation (224).

7. An apparatus for simulating images (104) generated by a three-dimensional imaging system (102), the apparatus comprising:
a sensor model (118) configured to represent the three-dimensional imaging system (102);
an environment model (116) configured to represent an environment (105) in which the three-dimensional imaging system (102) is to be operated; and
a three-dimensional rendering system (115) in communication with the sensor model (118) and the environment model (116) and configured to identify a group of models (128) for a group of effects (130) produced in the images (104) generated by the three-dimensional imaging system (102).

8. The apparatus of claim 7 further comprising:
a virtual environment (114) created by the three-dimensional rendering system (115) using the environment model (116), wherein the virtual environment (114) represents one of an actual environment and a conceptual environment within which the three-dimensional imaging system (102) is to be operated;
wherein the three-dimensional rendering system (115) is further configured to simulate operation of the three-dimensional imaging system (102) in the virtual environment (114) using the sensor model (118) and the group of models (128) for the group of effects (130).

9. The apparatus of any of claims 7 or 8, wherein the three-dimensional imaging system (102) is further configured to generate simulated data (138) using the sensor model (118), the environment model (116), and the group of models (128) for the group of effects (130), wherein the simulated data includes an image buffer (140) and a depth buffer (142).

10. The apparatus of claim 7, wherein the depth buffer (142) includes simulated depth images (104) and wherein the image buffer (140) includes at least one of simulated color images (144) and simulated intensity images (145).

11. The apparatus of claim 10, wherein the three-dimensional rendering system (115) is further configured to generate simulated images (152) using at least one of the simulated depth images (104), the simulated color images (144), and the simulated intensity images (145), wherein the simulated images (152) represent the images (104) generated by the three-dimensional imaging system (102) when the three-dimensional imaging system (102) is operated in the environment (105) that is physically substantially equivalent to the virtual environment (114) created by the three-dimensional rendering system (115).

12. The apparatus of claims 9 or 10, wherein the three-dimensional rendering system (115) is further configured to generate a point cloud (150) using the simulated depth images (104) and generate simulated images (152) using the point cloud (150) and at least one of the simulated color images (144) and simulated intensity images (145) in the image buffer (140); and wherein the simulated images (152) include a group of simulated effects that represent the group of effects (130) produced in the images generated by the three-dimensional imaging system (102) when the three-dimensional imaging system (102) is operated in an environment that is physically substantially equivalent to the virtual environment (114) created by the three-dimensional rendering system (115).
